Europäisches Patentamt

(19) European Patent Office

Office européen des brevets

(11) Publication number: **0 057 034**
A2

(12) # EUROPEAN PATENT APPLICATION

(21) Application number: **82200048.5**

(22) Date of filing: **15.01.82**

(51) Int. Cl.³: **B 01 D 29/14**
B 01 D 29/30, B 01 D 46/24

(30) Priority: **22.01.81 SE 8100349**

(43) Date of publication of application:
**04.08.82 Bulletin 82/31**

(84) Designated Contracting States:
**AT BE CH DE FR GB IT LI NL**

(71) Applicant: **AB Metall- & Bergprodukter**
**Box 3**
**S-441 21 Alingsäs(SE)**

(72) Inventor: **Samuelsson, Björn**
**Garvaregatan 6**
**S-44135 Alingsäs(SE)**

(74) Representative: **Roth, Ernst Adolf Michael et al,**
**GÖTEBORGS PATENTBYRA AB Box 5005**
**S-402 21 Göteborg(SE)**

(54) A device for the filtration of fluids.

(57) A device for the filtration of fluids and comprising a container (11) provided with a lid (16) and being divided into two chambers (A,B) by means of a filter (20). The container is provided with inlet and outlet connections for the fluid and a support cage (21) for a textile filter. The object of the invention is to simplify the design and the handling upon changing of the filter and to make possible the discharge of the filtrate and the cleaning of the filter by means of flushing. These objects have been attained in that the filter element (22) is in the form of a tubular filter and the support cage (21) consists of a cylinder open at both ends, that the open ends of the tubular filter (22) are foldable around the ends (23) of the support cage, and that the folded-around portions of the tubular filter form seals, on the one hand against one of the limiting walls (19) of the chambers and on the other hand against the inner-side of the lid (16) of the container.

FIG.1

1

A device for the filtration of fluids

The present invention relates to a device for the filtration of fluids and comprising a container provided with a lid and being divided by means of a filter into two chambers provided with pipe connections for in- and outflowing fluid, respectively, said filter comprising a support cage supporting a textile filter element.

Background of the invention

In a known device of the aforementioned kind, the filter is in the form of a filter bag the opening of which is hemmed and provided with a ring intended to be placed in a seat in the container. The ring is sealingly pressed against its seat either directly by the lid or by the intermediary of a spring-loaded intermediate ring or plate. In this filtering device, the filtrate will remain in the filter bag which therefore has to be changed at comparatively short intervals. Further, it is not possible to flush the filter with a cleaning fluid so that the filtrate may be flushed away.

Furthermore, the filter bag as such is a complication in that it has to be made up into suitable shape and also in that it necessitates a support cage with a bottom which makes the device more expensive.

The object and main charateristics of the invention

The object of the present invention is to provide a filtering device which is of a simple design and therefore also cheap to manufacture and wherein the filtrate may be drawn off and the filter flushed clean, wherein a complicated manufacturing of the filter is not necessary, and wherein the filter may be changed rapidly and easily. This object has been attained in that the filter element consists of a tubular filter and the support cage consists of a cylinder open at both ends, that the open ends of the tubular filter are foldable around the ends of the support cage and that the folded-around portions of the tubular filter form seals on the one hand against one of the chamber limiting walls and on the other hand against the inner side of the lid of the container.

## Description of the drawing
Fig. 1 is a longitudinal section through a filtering device according to the invention, and
Fig. 2 is to a larger scale a section through an alternative embodiment of the support cage constituting a part of the filtering device according to the invention.

## Description of an embodiment
The filtration device according to the invention consists of a container 11 provided with an inlet pipe connection 12, an outlet pipe connection 13 for the filtered fluid, a second outlet pipe connection 14 which may be used for so called cross-flow operation of the filtration device, and a third outlet pipe connection 15 for the removal of sludge when the filter is being flushed clean. The container 11 is adapted to be closed by means of a lid 16 which by means of a yoke 17 and a screw 18 may be brought to sealingly close the container. Between the outlets 13 and 14 there is provided, inside the container, a radial flange 19 forming an abutment for the lower end of the filter 20. The filter 20 consists of a support cage 21, and at the inner side thereof, a filter element 22 in the form of a tubular filter. The filter element is made of textile material for instance a woven fabric or needle felt consisting of natural and/or synthetic fibres. The tubular filter is slightly longer than the axial extension of the support cage, so that the two end portions of the tube may be folded around the end portions 23 of the support cage. Further, the length of the support cage 21 is so dimensioned and the lid 16 of the container 11 is so formed, that the lid 16 may be tightened against the support cage, so that the folded-around end portions of the tubular filter will be held pinched on the one side against the flange 19 and on the other side against the inner side of the lid. The lid 16 is limitedly freely displaceable in the container opening 24 and dynamically tightened therein by means of a sealing 25. By this arrangement the tubular filter is efficiently clamped in place and there is also obtained a very good seal between the two chambers A and B of the filtration device and furthermore, the filter is very simple to manufacture and is very easily changed.

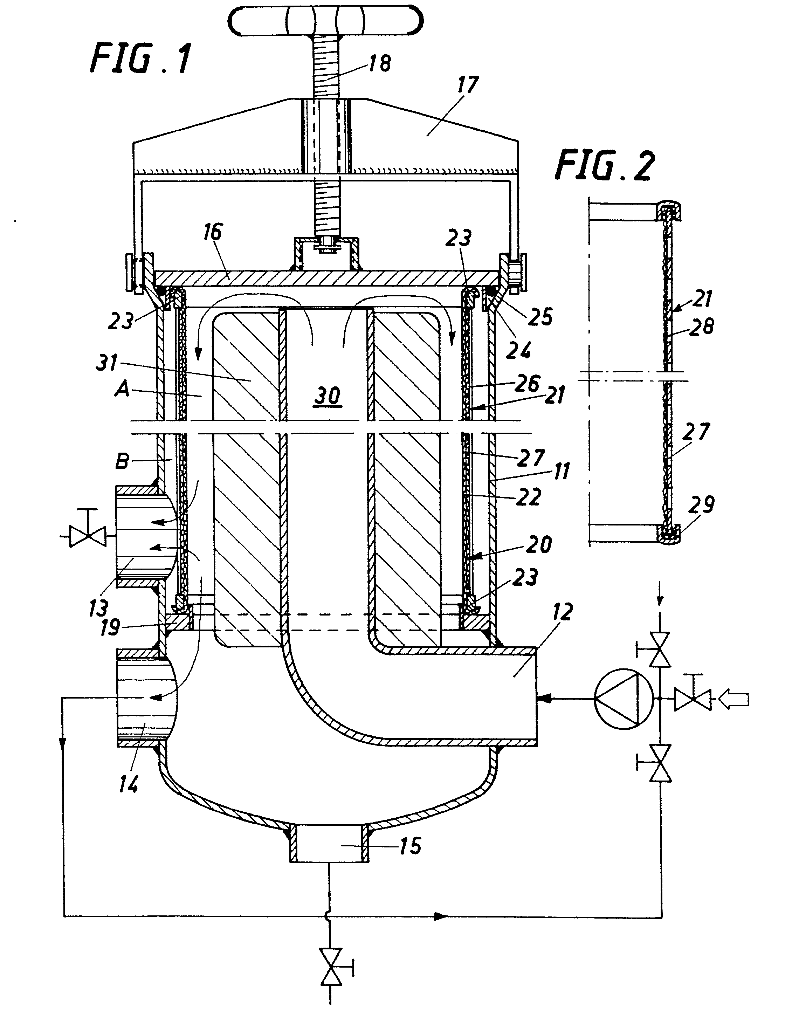

The support cage 21 according to Fig. 1 consists of a cylindrical wire grid with vertically extending wires 26, at the inner side of which there is placed a preferably fine mesh wire mesh 27. An alternative embodiment of the support cage is illustrated in Fig. 2 wherein the support cage is in the form of a perforated steel cylinder 28 with comparatively large perforations and provided, at the inner side, with a fine-mesh wire mesh 27 which is connected to the cylinder 28 by means of a channel-shaped annulus 29 at each end.

Numeral 30 indicates a pipe arranged axially in the container and communicating with the inlet connection 12 and which guides the fluid to be filtered towards the lid from which the fluid is distributed along the tubular filter. A filling element 31 is arranged around the central pipe 30. Apart from its function to partly fill out the container, this element may also contain a vibrator which increases the filtration capacity in the case of products which are difficult to filter off.

In operation of the device a fluid to be filtered is pumped through the inlet 12 and the pipe 30 to the chamber A where the fluid passes through the filter and flows off from the chamber B through the outlet 13. Filtered-off particles are collected in the filtrate pocket, that is in the lower part of the container, and may be drawn off through the outlet 15. If the filter is to be flushed clean, a cleaning fluid

4

is supplied through the outlet 13, so that the filter tube is flushed clean by removal of the caked filtered-off particles. The fluid is discharged through the outlet 15 to a drainage pipe or to a tank for collecting used cleaning fluid.

The invention is not limited to the embodiments illustrated since it is susceptible of various modifications within the scope of the claims.

## Claims

1. A device for the filtration of fluids and comprising a container (11) provided with a lid (16) and being divided by means of a filter (20) into two chambers (A,B) provided with pipe connections (12,13) for in- and outflowing fluids, respectively, said filter (20) comprising a support cage (21) for supporting a textile filter element (22), c h a r a c t e r i z e d i n that the filter element (22) consists of a tubular filter and the support cage (21) of a cylinder open at both ends, that the open ends of the tubular filter (22) are foldable around the ends (23) of the support cage, and that the folded-around portions of the tubular filter form seals on the one hand against one of the limiting walls (19) of the chambers (A,B) and on the other hand against the inner side of the lid (16) of the container (11).

2. A device as claimed in claim 1, c h a r a c t e r i z e d i n that the support cage (21) consists of a perforated cylinder or cylinder-shaped wire cage provided, at the side facing the tubular filter (22), with a preferably fine-mesh wire mesh (27) connected to the support cage (21) at the ends.

3. A device as claimed in claim 1, c h a r a c t e r i z e d i n that the lid (16) is axially freely displaceable in the container opening (24) and dynamically tightend therein by the intermediary of at least one sealing member (25).

FIG.1

FIG.2